# EUROPÄISCHE PATENTSCHRIFT

(11) **EP 0 826 813 B1**
(45) Veröffentlichungstag und Bekanntmachung des Hinweises auf die Patenterteilung: **31.10.2001**
(21) Anmeldenummer: 97114593.3
(22) Anmeldetag: 22.08.1997
(51) Int. Cl.: D06H 7/06, B26D 7/18, D01G 11/00

(54) **Verfahren und Vorrichtung zum Recyclen von Steppdeckenfüllmaterial**
Method and apparatus for recycling the filling material of quilts
Procédé et dispositif pour le recyclage de matériau de remplissage de couvertures piquées

(30) Priorität: 27.08.1996 DE 19634628
(43) Veröffentlichungstag der Anmeldung: 04.03.1998
(73) Patentinhaber: Badenia Bettcomfort GmbH & Co. KG, 77948 Friesenheim (DE)
(72) Erfinder: Mölders, Hans-Peter, 77654 Offenburg (DE); Engelhardt, Manfred, 77948 Friesenheim (DE); Kohler, André, 77948 Friesenheim (DE); Keller, Erich, 77948 Friesenheim (DE); Martin, Sybille, 09123 Chemnitz (DE); Nestler, Michael, 09127 Chemnitz (DE); Rupf, Dietmar, 09358 Wüstenbrand (DE); Wacker, Wilfried, 09238 Auerswalde (DE); Nendel, Wolfgang, 09569 Schönerstadt (DE); Köhler, Eberhard, 09127 Chemnitz (DE)
(74) Vertreter: Strych, Werner Maximilian Josef, Dr.

(56) Entgegenhaltungen:
- DE-A- 2 012 279
- US-A- 4 883 009
- US-A- 5 040 473

## Beschreibung

Die Erfindung betrifft ein Verfahren entsprechend dem Oberbegriff des Anspruchs 1 sowie eine Vorrichtung zur Durchführen dieses Verfahrens.

Es sind verschiedene Verfahren und Vorrichtungen bekannt, mit denen es möglich ist, z.B. die bei der Steppdeckenherstellung entstehenden überschüssigen Randstreifen, die aus Deckschichten und Füllmaterial bestehen, von der Warenbahn zu trennen.

So ist aus der DE-OS 38 09 962 eine Schneidmaschine mit vertikal ausgerichteten Schneidstrecken bekannt, die eine Z-förmige Bahnumschlingung und eine Querführung mit einem schwenkbaren oberen Schneidmesser aufweist. Mit dieser Maschine ist es nur möglich, einlagige Randstreifen zu trennen. Das Trennen mehrlagiger Randstreifen und die Vorbereitung für eine nachfolgende Separierung ist nicht möglich.

Für das Herauslösen ausgeschnittener Materialbereiche ist aus der DE-OS 28 19 441 eine Vorrichtung bekannt, bei der mit Hilfe konfigurierter Tragnadeln aus einer mehrlagigen Stoffbahn ausgeschnittene Materialbereiche erfaßt und von der übrigen Materialbahn entfernt werden können. Diese Vorrichtung erfordert einen extrem hohen technischen Aufwand und ist nur in der Lage, in der Ebene liegende Materialbereich zu entfernen. Eine Trennung mehrlagiger Materialbahnen ist nicht möglich.

Die DE-OS 31 37 189 offenbart eine Vorrichtung, die nach der Trennung Abfallstreifen in einen Abfallkanal weiterleitet. Diese Streifen werden gefaltet und dann über einen Kanal und ein Förderband abgefördert. Der Nachteil dieser Vorrichtung besteht darin, daß trotz des erheblichen technischen Aufwandes nur Abfallstreichen aufbereitet werden können, die einlagig sind.

Die EP 0 318 754 offenbart eine Vorrichtung, mit der es möglich ist, synchron zum Schneiden Abfälle abzuziehen. Hierzu werden die Reststücke automatisch von Nadeln eingeklemmt, die beim Austragen der Reststücke automatisch zurückgezogen werden. Hierzu hat die Vorrichtung rotierende Walzen, an denen die Nadeln angeordnet sind. Außer einem erheblichen technischen Aufwand hat diese Vorrichtung den Nachteil, daß durch die Nadeln und deren Zurückziehen Füllstoff an den Decknadeln gehalten wird, und somit eine Trennung von Decklagen und Füllstoff nur begrenzt möglich ist.

Für die Abführung von Randstreifen nach dem Schneiden ist aus der DE-OS 34 16 341 eine Vorrichtung bekannt, mit der die Randstreifen über eine Walzenkombination zum Inneren der Vorrichtung umgelenkt und abgeführt werden. Die Bearbeitung mehrlagiger Randstreifen ist mit dieser Vorrichtung nicht möglich.

Aus der EP 0 586 876 ist eine Vorrichtung mit einem Rotationszylinder bekannt, der die Schneidfunktion übernimmt und durch Wechsel von mit Druck und Vakuum beaufschlagbaren zylinderintegrierten Kammern eine Mitnahme und nachfolgend eine Abförderung des Stoffabfalls ermöglicht. Für die Anwendung auf mehrlagige Randstreifen wird, bedingt durch die Luftdurchlässigkeit der Deckschichten, Füllmaterial mit den Deckschichten verbunden, so daß eine Separierung nicht möglich wird. Des weiteren ist der technische Aufwand für die Druck-Vakuumbeaufschlagung sehr hoch, und außerdem sind zusätzliche Filtereinrichtungen erforderlich, um die Funktionssicherheit zu gewährleisten.

Der Erfindung liegt die Aufgabe zugrunde, ein Verfahren und eine Vorrichtung zum Recyclen wenigstens eines Randstreifens von wenigstens zweilagigen Bahnmaterialien, insbesondere von Steppdecken, zu schaffen, die es ermöglichen, das Füllmaterial und die Deckschichten des Randstreifens getrennt weiterzuverwerten.

Gelöst wird diese Aufgabe gem. der Erfindung durch die im Anspruch 1 bzw. **8** angegebenen Merkmale. Zweckmäßige Ausgestaltungen der Erfindung ergeben sich aus den entsprechenden Unteransprüchen.

Das Auseinanderziehen der Deckschichten und das getrennte Abfördern der Deckschichten eines Randstreifens und dessen Füllmaterial ermöglicht die Realisierung verschiedener Vorrichtungen.

Das Auseinanderziehen der Deckschichten **des Randstreifens** kann über **Separier**-Walzen, insbesondere Klemmwalzen, aber auch mittels Beaufschlagung durch einen Saugluftstrom erfolgen. **Die Randstreifen können auch mit Zug beaufschlagt werden.**

Das Füllmaterial kann ebenfalls mittels eines Saugluftstroms abgefördert werden, wobei zweckmäßigerweise für jede Deckschicht Abstreifer und ein diesem zugeordneter Absaugtrichter verwendet wird, über den die Deckschichten geführt werden, so daß man gleichzeitig eine Trennung der Deckschichten und eine Abförderung des Füllmaterials erreichen kann.

Die Weiterleitung der Deckschichten und des Füllmaterials erfolgt zweck mäßigerweise über ein mit einem Saugluftstrom beaufschlagtes Rohrsystem, das zu Auffangbehältern führt. Dabei kann das Füllmaterial zum sofortigen Wiederverwenden bei der Herstellung des entsprechenden Bahnmaterials verwendet und entsprechend recycelt werden.

Die Erfindung wird nachstehend anhand der Fig. 1 - 6 beispielsweise erläutert. Es zeigt:
- **Fig. 1**: eine perspektivische Darstellung einer Schneideinrichtung zum Abtrennen eines Randstreifens einer zweilagigen Materialbahn;
- **Fig. 2 - 5**: schematische Darstellungen von Vorrichtungen mit einer Schneideinrichtung und einer nachgeordneten Separiereinrichtung in verschiedenen Ausführungsformen der Separiereinrichtung; und
- **Fig. 6**: eine perspektivische Darstellung einer Gesamtanlage zum Recyclen von Füllmaterial und Deckschichten von Bahnmaterialien.

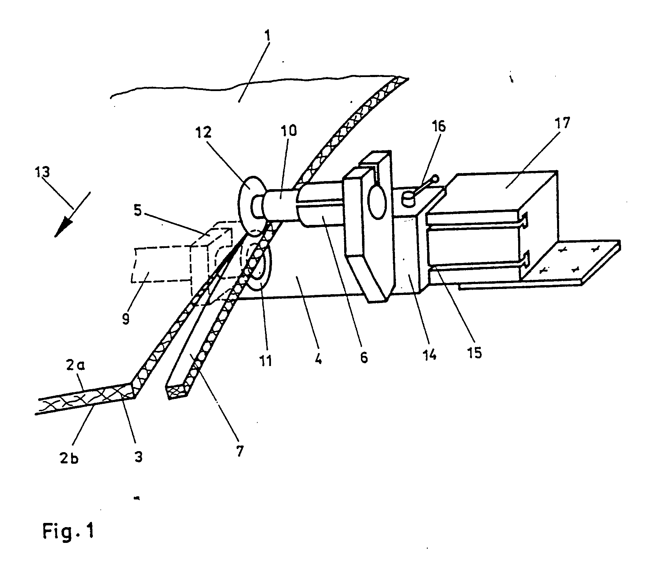

Fig. 1 zeigt eine zweilagige Materialbahn 1 mit zwei Deckschichten 2a, 2b und einem dazwischen befindlichen Füllmaterial 3, von der mittels einer Schneideinrichtung 4, **die** eine Schneidstation 5,6 **umfasst**, ein Randstreifen 7 abgetrennt wird.

Hierzu hat die Schneideinrichtung 4 einen Antriebsmotor 9 bzw. 10 für Schneidmesser 11 und 12. Diese Elemente sitzen an einem verschiebbaren Grundkörper 14, der an einem festen Grundkörper 17 über Führungen 15 verschiebbar gelagert ist.

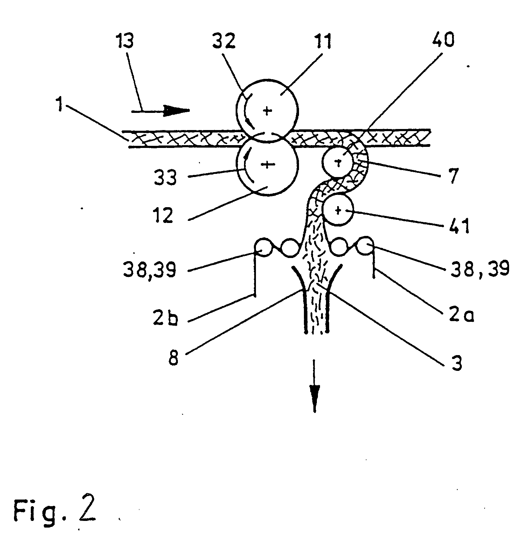

Bei der in Fig. 2 gezeigten Vorrichtung wird die zu bearbeitende Materialbahn 1 den Schneidmessern 11, 12, die sich in Richtung der Pfeile 32, 33 drehen, in Richtung des Pfeils 13 zugeführt.

Der abgetrennte Randstreifen 7 wird über Umlenkwalzen 40, 41, Separierwalzen 38, 39 zugeführt. Dabei sind für jede Deckschicht 2a, 2b zwei Separierwalzen 38, 39 vorgesehen, durch die die Deckschichten auseinandergezogen werden. Hierzu werden die Deckschichten durch nicht gezeigte Einrichtungen mit Zug beaufschlagt.

Durch das Auseinanderziehen der Deckschichten 2a, 2b in der Separiereinrichtung 8 kann das Füllmaterial in einen schematisch dargestellten Fülltrichter fallen und abgefördert werden.

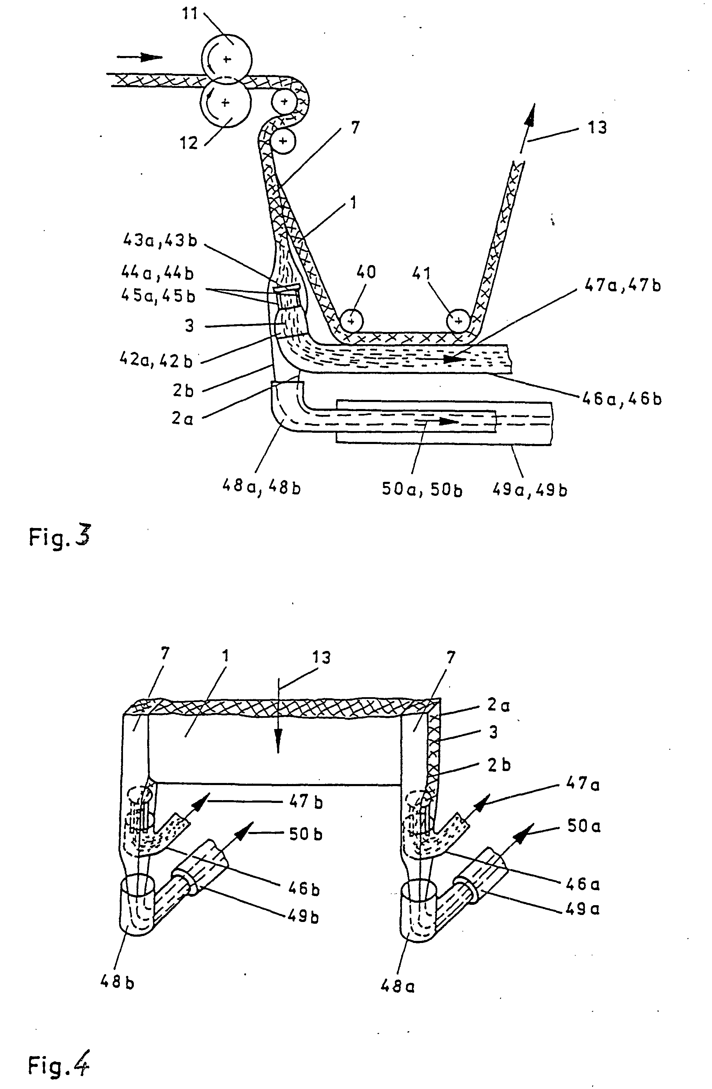

Die Fig. 3 - 5 zeigen verschiedene Möglichkeiten der Ausbildung der Separiereinrichtung.

Gem. Fig. 3 wird der Randstreifen 7 Abstreifern 43a, 43b, Abstandshaltern 44a, 44b und einem Fülltrichter 42a , 42b bzw. 48a, 48b zugeführt. Die übereinander geordneten Fülltrichter nehmen einerseits das Füllmaterial und andererseits die beiden Deckschichten auf und leiten sie über Kanäle 46a, 46b, bzw. 48a, 48b, 49a, 49b, 50a, 50b ab. Die Materialbahn 1 wird über Umlenkwalzen 40, 41 in Richtung des Pfeils 13 transportiert.

Fig. 4 zeigt die Ausbildung der Separiereinrichtung zur Bearbeitung von zwei Randstreifen 7, mittels der die Deckschichten 2a, 2b und das Füllmaterial 7 in Richtung der Pfeile 47a, b, 50a, 50b abtransportiert werden kann.

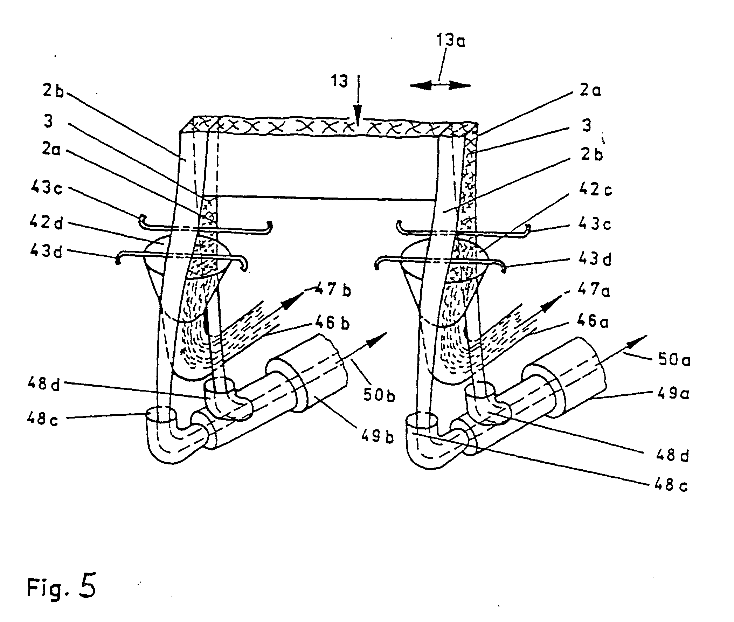

Bei der in Fig. 5 gezeigten Ausführungsform der Separiereinrichtung sind zwei stangenförmige Abstreifer 43c, 43d vorgesehen, die zwischen den Deckschichten 2a, 2b eines Randstreifens 7 angeordnet sind und bewirken, daß die Deckschichten auseinandergezogen werden, und das Füllmaterial in einen Fülltrichter 42c bzw. 42d fallen bzw. gesaugt werden kann.

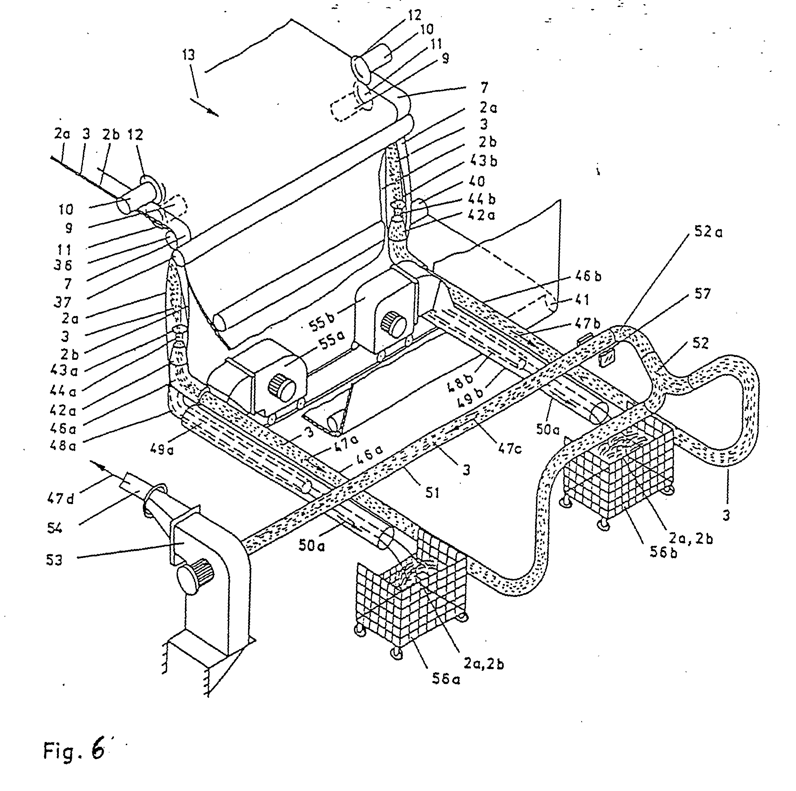

Fig. 6 zeigt die Gesamtanordnung einer Anlage, mit der eine zweilagige Materialbahn bearbeitet werden kann, wobei zwei Randstreifen 7 anfallen, deren Deckschichten 2a, 2b und deren Füllmaterial 7 über ein Rohrsystem abgeleitet werden.

Die Anlage hat Gebläse 55a, 55b, die mit Transportkanälen 46a, 46b, 48a - 48d, 49a, 49b, 51, 52, 52a zusammenwirken, um das Deckschichtmaterial und das Füllmaterial in Richtung der Pfeile 47a - 47d bzw. 50a, 50b zu transportieren und das Deckschichtmaterial Auffangbehältern 56a, 56b zuzuführen bzw. das Füllmaterial mittels eines Gebläses 53 und einer Druckleitung 54 abzufördern.
Zweckmäßigerweise wird das aus den Randstreifen entnommene Füllmaterial unmittelbar zur Herstellung eines neuen Bahnmaterials verwendet und entsprechend recycelt.

Mittels eines Sensorsystems 57 nach dem Kanal 52, der die beiden getrennten Füllstoffrohre vereinigt, kann festgestellt werden, ob das Deckschichtmaterial in dieses Rohrsystem gelangt ist, das dann manuell entfernt werden kann.

Die jeweiligen Fülltrichter der Separiereinrichtung sind zweckmäßigerweise mit einer relativ breiten Einfüllöffnung versehen, so daß auch bei einer Changierbewegung entsprechend dem Pfeil 13a in Fig. 5 eine gleichmäßige Abführung des Füllmaterials 3 gewährleistet wird.

## Patentansprüche

1. Verfahren zum Recyclen von Füllmaterial (3) eines Randstreifens wenigstens zweilagiger Bahnmaterialien, insbesondere von Steppdecken,
**dadurch gekennzeichnet, daß**
in einem ersten Verfahrensschritt ein Randstreifen (7) abgetrennt und in einem zweiten Verfahrensschritt die Deckschichten (2a, 2b) des Randstreifens auseinandergezogen und das Füllmaterial (3) zwischen den Deckschichten (2a, 2b) abgefördert wird.

2. Verfahren nach Anspruch 1,
**dadurch gekennzeichnet, daß**
das Füllmaterial (3) zur Bahnmaterialherstellung recycelt wird.

3. Verfahren nach Anspruch 1 oder 2,
**dadurch gekennzeichnet, daß**
das Füllmaterial (3) abgesaugt wird.

4. Verfahren nach einem der Ansprüche 1 - 3,
**dadurch gekennzeichnet, daß**
die Deckschichten (2a, 2b) mit Zug beaufschlagt werden.

5. Verfahren nach einem der Ansprüche 1 - 4,
**dadurch gekennzeichnet, daß**
die Deckschichten (2a, 2b) über **Separier**-Walzen (38, 39) geführt werden.

6. Verfahren nach einem der Ansprüche 1 - 5,
**dadurch gekennzeichnet, daß**
die Deckschichten (2a, 2b) mit einem Saugluftstrom beaufschlagt werden.

7. Verfahren nach einem der Ansprüche 1 - 6,
**dadurch gekennzeichnet, daß**
das Füllmaterial (3) mit einem Saugluftstrom beaufschlagt wird.

8. Vorrichtung zur Durchführung des Verfahrens nach einem der Ansprüche 1 - 7,
**gekennzeichnet durch**
wenigstens eine Schneideinrichtung (4) zum Abtrennen eines Randstreifens (7) und eine nachgeschaltete Separiereinrichtung (8) zum Auseinanderziehen der Deckschichten (2a, 2b) **sowie eine Abfördereinrichtung zum separaten Abfördern des Füllmaterials.**

9. Vorrichtung nach Anspruch 8,
**gekennzeichnet durch**
**Separier-Walzen** (38, 39) für jede Deckschicht (2a, 2b).

10. Vorrichtung nach Anspruch 9,
**dadurch gekennzeichnet, daß**
die **Separier**-Walzen als Klemmwalzen ausgebildet sind.

11. Vorrichtung nach einem der Ansprüche 7 - 10,
**dadurch gekennzeichnet, daß**
die Deckschichten (2a, 2b) zum Auseinanderziehen über Abstreifer (43a - d) geführt sind.

12. Vorrichtung nach einem der Ansprüche 8 - 10,
**gekennzeichnet durch**
einen zwischen den auseinandergezogenen Deckschichten (2a, 2b) angeordneten Absaugtrichter (42a - d) für das Füllmaterial (3).

13. Vorrichtung nach einem der Ansprüche 8 - 11,
**gekennzeichnet durch**
je einen Absaugtrichter (48a - c) für die Deckschichten (2a, 2b).

14. Vorrichtung nach einem der Ansprüche 8 - 14,
**gekennzeichnet durch**
der Schneideinrichtung **(4)** nachgeordnete Umlenkwalzen (41).

## Claims

1. A method of recycling filling material (3) of an edge strip of at least double-layer web materials, in particular quilts, **characterised in that** in a first method step an edge strip (7) is cut off and in a second method step the cover layers (2a, 2b) of the edge strip are pulled apart and the filling material (3) between the cover layers (2a, 2b) is conveyed away.

2. A method according to claim 1 **characterised in that** the filling material (3) is recycled to web material production.

3. A method according to claim 1 or claim 2 **characterised in that** the filling material (3) is sucked away.

4. A method according to one of claims 1 to 3 **characterised in that** the cover layers (2a, 2b) are subjected to a tensile loading.

5. A method according to one of claims 1 to 4 **characterised in that** the cover layers (2a, 2b) are guided by way of separating rollers (38, 39).

6. A method according to one of claims 1 to 5 **characterised in that** the cover layers (2a, 2b) are subjected to the action of a suction air flow.

7. A method according to one of claims 1 to 6 **characterised in that** the filling material (3) is subjected to the action of a suction air flow.

8. Apparatus for carrying out the method according to one of claims 1 to 7 **characterised by** at least one cutting device (4) for cutting off an edge strip (7) and a downstream-disposed separating device (8) for pulling apart the cover layers (2a, 2b) and a discharge conveyor device for separately conveying the filling material away.

9. Apparatus according to claim 8 **characterised by** separating rollers (38, 39) for each cover layer (2a, 2b).

10. Apparatus according to claim 9 **characterised in that** the separating rollers are in the form of pinch rollers.

11. Apparatus according to one of claims 7 to 10 **characterised in that** the cover layers (2a, 2b) are guided over stripping-off devices (43a - d) for pulling them apart.

12. Apparatus according to one of claims 8 to 10 **characterised by** a suction removal funnel (42a - d) for the filling material (3), said suction removal funnel being disposed between the pulled-apart cover layers (2a, 2b).

13. Apparatus according to one of claims 8 to 11 **characterised by** a respective suction removal funnel (48a - c) for each of the cover layers (2a, 2b).

14. Apparatus according to one of claims 8 to 14 **characterised by** direction-changing rollers (41) arranged downstream of the cutting device (4).

## Revendications

1. Procédé pour le recyclage de matériau de remplissage (3) d'une bande marginale de matériaux en bande à au moins deux couches, en particulier de couvertures matelassées,
**caractérisé en ce que**
dans une première étape de procédé, une bande marginale (7) est séparée et dans une seconde étape de procédé, les couches de recouvrement (2a, 2b) de la bande marginale sont écartées l'une de l'autre et le matériau de remplissage (3) est évacué entre les couches de recouvrement (2a, 2b).

2. Procédé selon la revendication 1, **caractérisé en ce que** le matériau de remplissage (3) est recyclé pour la fabrication de matériau en bande.

3. Procédé selon la revendication 1 ou 2,
**caractérisé en ce que**
le matériau de remplissage (3) est aspiré.

4. Procédé selon l'une des revendications 1 à 3,
**caractérisé en ce que**
les couches de recouvrement (2a, 2b) sont soumises à la traction.

5. Procédé selon l'une des revendications 1 à 4
**caractérisé en ce que**
les couches de recouvrement (2a, 2b) sont guidées sur des cylindres de séparation (38, 39).

6. Procédé selon l'une des revendications 1 à 5,
**caractérisé en ce que**
les couches de recouvrement (2a, 2b) subissent l'impact d'un courant d'air d'aspiration.

7. Procédé selon l'une des revendications 1 à 6,
**caractérisé en ce que**
le matériau de remplissage (3) subit l'impact d'un courant d'air d'aspiration.

8. Dispositif pour la mise en oeuvre du procédé selon l'une des revendications 1 à 7,
**caractérisé par**
au moins un dispositif de coupe (4) pour la séparation d'une bande marginale (7) et d'un dispositif de séparation (8) placé en aval pour l'écartement des couches de recouvrement (2a, 2b) **ainsi qu'un dispositif de transport pour l'évacuation séparée du matériel de remplissage.**

9. Dispositif selon la revendication 8,
**caractérisé par**
des cylindres de séparation (38, 39) pour chaque couche de recouvrement (2a, 2b).

10. Dispositif selon la revendication 9,
**caractérisé en ce que**
les cylindres de séparation sont réalisés comme des cylindres de serrage.

11. Dispositif selon l'une des revendications 7à 10,
**caractérisé en ce que**
les couches de recouvrement (2a, 2b) sont guidées sur des racleurs (43a - d) pour l'écartement.

12. Dispositif selon l'une des revendications 8 à 10,
**caractérisé par**
un entonnoir d'aspiration (42a - d) pour le matériau de remplissage (3), entonnoir qui est disposé entre les couches de recouvrement écartées (2a, 2b).

13. Dispositif selon l'une des revendications 8 à 11,
**caractérisé par**
un entonnoir d'aspiration (48a - C) pour les couches de recouvrement (2a, 2b).

14. Dispositif selon l'une des revendications 8 à 14,
**caractérisé par**
des cylindres de renvoi (41) disposés en aval du dispositif de coupe (4).
